# EUROPÄISCHE PATENTANMELDUNG

(11) **EP 2 796 045 A1**
(43) Veröffentlichungstag der Anmeldung: **29.10.2014**
(21) Anmeldenummer: 14165127.3
(22) Anmeldetag: 17.04.2014
(51) Int. Cl.: A21C 1/14, B01F 15/04, G01G 19/32, B01F 15/00

(54) **Vorrichtung zur Bereitstellung von Back- und Backzusatzstoffen**

(30) Priorität: 26.04.2013 AT 502892013
(71) Anmelder: Kisch, Andreas, 4861 Schörfling (AT)
(72) Erfinder: Kisch, Andreas, 4861 Schörfling (AT)
(74) Vertreter: Hübscher, Helmut

(57) **Zusammenfassung**

Es wird eine Vorrichtung zur Bereitstellung von Back- und Backzusatzstoffen in vorgegebenen Mengen vorgeschlagen. Die Vorrichtung umfasst Vorratsbehälter (1), denen je eine Austragseinrichtung (2) zur Stoffabgabe auf eine Fördereinrichtung (3) zugehört, eine Wiegeeinrichtung und eine Steuereinrichtung, welche die Austragseinrichtungen (2) abhängig vom gemessenen Gewicht im Sinne eines Austrags von jeweils vorgegebenen Mengen ansteuert. Um vorteilhafte Verhältnisse zu schaffen, wird vorgeschlage, dass jedem Vorratsbehälter (1) wenigstens ein Gewichtssensor (4), insbesondere drei Gewichtssensoren (4), zugeordnet ist, und im Übergabebereich von Austragseinrichtung (2) und Fördereinrichtung (3) eine Staubabsaugung (5) vorgesehen ist.

## Beschreibung

Die Erfindung bezieht sich auf eine Vorrichtung zur Bereitstellung von Back-und Backzusatzstoffen in vorgegebenen Mengen, mit Vorratsbehältern, denen je eine Austragseinrichtung zur Stoffabgabe auf eine Fördereinrichtung zugehört, mit einer Wiegeeinrichtung und mit einer Steuereinrichtung, welche die Austragseinrichtungen abhängig vom gemessenen Gewicht im Sinne eines Austrags von jeweils vorgegebenen Mengen ansteuert.

Derartige Vorrichtungen dienen bei Bäckereien und Großbäckereien zur Bereitstellung der definierten Bestandteilmengen einer Backmischung. Die einzelnen Back- und Backzusatzstoffe sind in gesonderten Vorratsbehältern untergebracht und werden gemäß dem Stand der Technik über ein gemeinsames Förderband in einen Auffang-Mischbehälter gefördert. Das Einwiegen erfolgt beim Stand der Technik derart, dass die Fördereinrichtung mit einer Wiegeeinrichtung ausgestattet ist. Mit solchen Vorrichtungen werden die einzelnen Komponenten, jede für sich, nacheinender in den Mischbehälter eingebracht, wobei die Austragseinrichtungen von der Steuereinrichtung derart angesteuert werden, dass stets die gewünschte bzw. erforderliche Menge aus dem jeweiligen Vorratsbehälter auf die Fördereinrichtung, insbesondere ein Förderband, abgegeben wird. Nachteilig ist es bei derartigen Vorrichtungen insbesondere, dass stets nur eine Komponente der Back- bzw. Backzusatzstoffe ausgetragen und verwogen und in den Mischbehälter eingebracht werden kann. Erst nachdem die jeweilige Komponente in den Mischbehälter eingebracht wurde kann mit der nächsten Komponente in gleicher Weise verfahren werden. Zudem tritt eine nicht mindere Staubbelastung beim Austragen der Back- und Backzusatzstoffe auf die Fördereinrichtung auf. Insbesondere bei besonders feinen Back- und Backzusatzstoffen führt dies zu einer Verunreinigung der Vorrichtung und Anlage bzw. zu einem Verlust von Backmitteln.

Ausgehend von einer Vorrichtung der vorgeschilderte Art liegt der Erfindung die Aufgabe zugrunde, die vorgeschilderten Mängel zu vermeiden und eine Vorrichtung zur Bereitstellung von Back- und Backzusatzstoffen zu schaffen, die alle Komponenten in der gewünschten Menge in besonders kurzer Zeit bereitstellen kann und dabei vorzugsweise nur eine besonders geringe Staubbelastung verursacht.

Die Erfindung löst die gestellte Aufgabe dadurch, dass jedem Vorratsbehälter wenigstens ein Gewichtssensor, insbesondere drei Gewichtssensoren, zugeordnet ist und im Übergabebereich von Austragseinrichtung und Fördereinrichtung eine Staubabsaugung vorgesehen ist.

Damit, dass jedem Vorratsbehälter wenigstens ein Gewichtssensor zugeordnet ist, besteht die Möglichkeit die Austragseinrichtung eines jeden Vorratsbehälters gleichzeitig anzusteuern und die erforderlichen Back- und Backzusatzstoffe gleichzeitig auf die Fördereinrichtung, insbesondere ein Förderband auszutragen. Mit dem Förderband werden die einzelnen Stoffe in bekannter Weise einer Weiterverarbeitung, insbesondere einem Übergabe- bzw. Mischbehälter zugeführt. Somit kann innerhalb kürzester Zeit eine gewünschte Backmischung vorbereitet und mischfertigt aufbereitet werden. Sind insbesondere drei Gewichtssensoren je Vorratsbehälter vorgesehen, stützt sich der Vorratsbehälter also auf einer Dreipunktaufhängung an einem gemeinsamen Vorrichtungsrahmen ab, so lässt sich das Gewicht von Vorratsbehälter und Inhaltsstoffen besonders genau und störungsunanfällig feststellen. Eine exakte Regelung des Austrags auf die Fördereinrichtung wird somit möglich. Soll die Vorrichtung eine möglichst geringe Staubbelastung verursachen bzw. den "Schwund" von Backzusatzstoffen im Bereich der Übergabe verringern, empfiehlt es sich im Übergabebereich von Austragseinrichtung und Fördereinrichtung eine Staubabsaugung vorzusehen.

In diesem Zusammenhang ist es von Vorteil, wenn der Vorratsbehälter eine Vorratskammer aufweist, die über einen Filter an eine Unterdruckfördereinrichtung angeschlossen ist. Mit dieser Unterdruckfördereinrichtung kann beispielsweise Umgebungsluft durch die Austragseinrichtung in den Vorratsbehälter eingesaugt werden, was bewirken soll, dass Vorratsbehälterinhaltsstoffe aufgewirbelt werden, um ein Festsitzen der Stoffe im Behälter zu vermeiden. Dies bewirkt zudem, dass die Stoffe bestmöglich aus dem Vorratsbehälter ausgetragen werden können. Um dabei zu vermeiden, dass die Back- bzw. Backzusatzstoffe des jeweiligen Behälters von der Unterdruckfördereinrichtung abgesaugt werden, ist die Vorratskammer insbesondere nach oben mit einem Filter abgeschlossen, der sämtliche Stoffe in den Vorratsbehältern zurückhält. Zur Reinigung der Filter kann die Förderrichtung der Unterdruckfördereinrichtung kurzfristig umgedreht werden und der Filter ausgeblasen bzw. über Drückstöße abgereinigt werden. Insbesondere um ein Verlegen des Filters zu vermeiden und eine möglichst große Filterfläche zur Verfügung zu haben, empfiehlt es sich, wenn der Filtervorratsbehälter oberseitg die Vorratskammer zumindest nahezu vollständig überdeckend in der Vorratskammer angeordnet ist. Konstruktiv ist die Vorratskammer nach oben mit einem Deckel abgeschlossen und ist der Filter im Bereich der Trennebene vom Vorratsbehälter und Deckel angeordnet.

Besonders einfache Verhältnisse ergeben sich dabei, wenn die Vorratskammern an eine gemeinsame Unterdruckleitung angeschlossen sind, die über Stichleitungen und Ventile in die Vorratskammer oberhalb des Filters ausmündet. Die Ventile können Regel- bzw. Steuerventile oder einfach Schaltventile sein. Ebenso können Druckregelventile vorgesehen sein, die es erlauben den in den jeweiligen Vorratsbehälter eingeleiteten Druck in Abhängigkeit des Behälterinhalts vorzugeben.

Der Schwund durch die Absaugung kann insbesondere dadurch besonders gering gehalten werden, dass die Staubabsaugung eine im Übergabebereich von Austragseinrichtung und Fördereinrichtung ausmündende Saugleitung umfasst, die andernends unterhalb des Filters in die Vorratskammer einmündet. Ist die Vorratskammer mit Unterdruck beaufschlagt saugt dieser Unterdruck den im Übergabebereich auffliegenden Staub durch die Saugleitung in den zugehörigen Vorratsbehälter zurück. Der Staub kann sich somit nicht verflüchtigen und bleibt für eine weitere Verwendung verfügbar. Der Filter vermeidet dabei eine Absaugung des Staubes durch die Unterdruckfördereinrichtung. Zur Befüllung des Vorratsbehälters kann die Saugleitung an einen, vorzugsweise trichterförmigen, Beschickungsbehälter angeschlossen werden. Der Unterdruckförderer fördert dann über die Saugleitung den jeweiligen Stoff in den Vorratsbehälter. Auch damit wird eine unmäßige Staubbelastung, wie sie beispielsweise beim Einfüllen von Säcken in den Vorratsbehälter passiert, vermieden.

Der Fördereinrichtung, insbesondere dem Förderband kann eine Wiegeeinrichtung zugehören. Diese Wiegeeinrichtung dient zur Kontrolle der den Vorratsbehältern zugeordneten Gewichtssensoren. Bei Abweichungen kann unmittelbar auf etwaige Defekte rückgeschlossen werden, was die durch Produktionsausfälle entstehende Zeit reduziert.

Zur Verbesserung der Staubabsaugung empfiehlt es sich, wenigstens im Übergabebereich von Austragseinrichtung und Fördereinrichtung eine Abdeckhaube vorzusehen, an welche die Staubabsaugung angeschlossen ist. Diese Abdeckhaube kann die Fördereinrichtung auch vollkommen überdecken.

Um bei Absaugung bzw. beim Befüllen der Vorratsbehälter eine übermäßige Filterbelastung zu vermeiden, kann es von Vorteil sein, oberhalb der Einmündung der Saugleitung in die Vorratskammer unterhalb des Filters ein gegen den Behälterboden weisendes Leitblech vorzusehen.

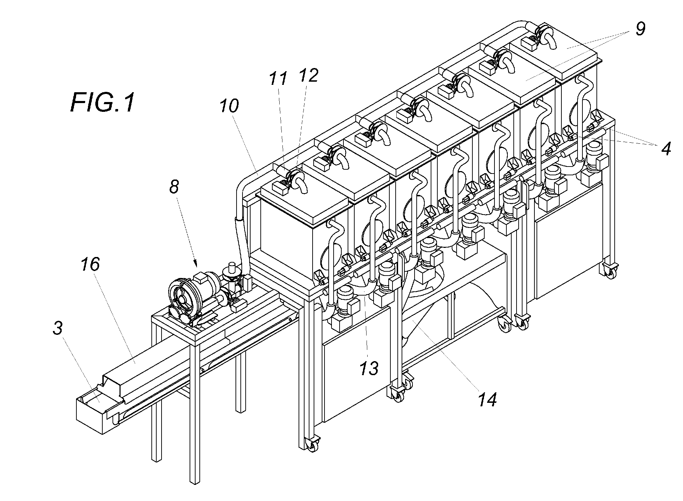

In der Zeichnung ist die Erfindung anhand eines Ausführungsbeispiels schematisch dargestellt. Es zeigen
- Fig. 1: eine erfindungsgemäße Vorrichtung in Schrägansicht,

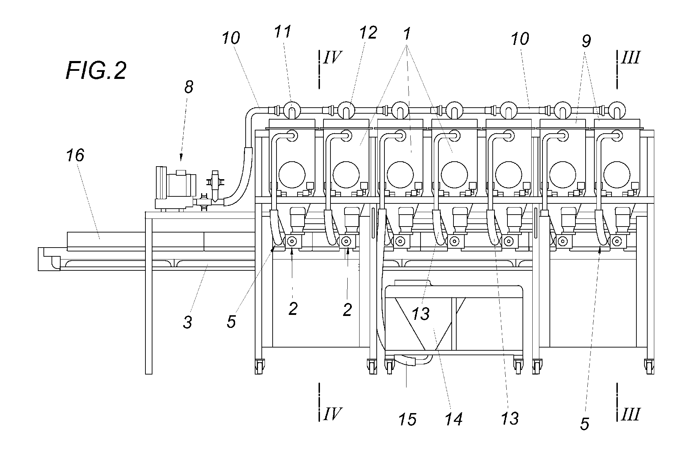

- Fig. 2: die Vorrichtung aus Fig. 1 in Seitenansicht,
- Fig. 3: die Vorrichtung aus Fig. 2 im Schnitt nach der Linie III-III im vergrößertem Maßstab und

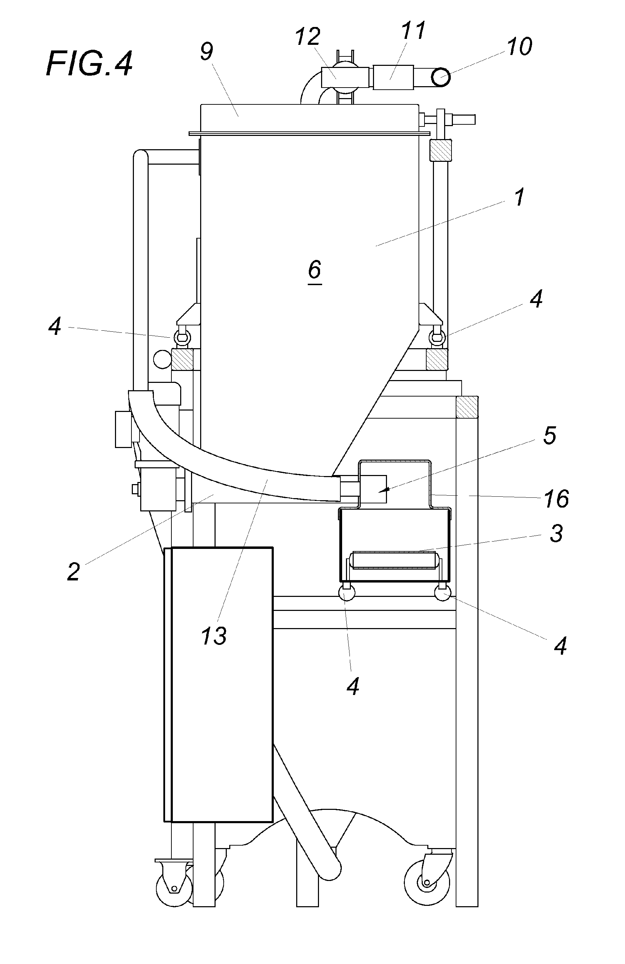

- Fig. 4: die Vorrichtung aus Fig. 2 im Schnitt nach der Linie IV-IV im vergrößerten Maßstab.

Eine erfindungsgemäße Vorrichtung zur Bereitstellung von Back- und Backzusatzstoffen in vorgegebenen Mengen umfasst eine Mehrzahl an Vorratsbehältern 1. Jedem Vorratsbehälter 1 gehört je eine Austragseinrichtung 2, eine Austragsschnecke, zur Stoffabgabe auf eine Fördereinrichtung 3, ein Förderband, zu. Zudem sind diverse Wiegesensoren, Gewichtssensoren 4, vorgesehen. Nicht näher dargestellt ist eine Steuereinrichtung, welche die Austragseinrichtungen 2 abhängig vom gemessenen Gewicht im Sinne eines Austrags von jeweils vorgegebenen Mengen an Back- und Backzusatzstoffen auf die Fördereinrichtung 3 ansteuert. Erfindungsgemäß gehört jedem Vorratsbehälter 1 wenigstens ein Gewichtssensor 4 zu. Im vorliegenden Ausführungsbeispiel sind je Vorratsbehälter 1 drei Gewichtssensoren 4 vorgesehen, um eine saubere Messung des Vorratsbehältergesamtgewichtes zu jedem Zeitpunkt zu ermöglichen. Zudem ist im Übergabebereich von Austragseinrichtung 2 und Fördereinrichtung 3 eine Staubabsaugung 5 vorgesehen.

Jeder Vorratsbehälter 1 weist eine Vorratskammer 6 auf, die über einen Filter 7 an eine Unterdruckfördereinrichtung 8, eine Saugpumpe, angeschlossen ist. Die Filter 7 sind vorratsbehälteroberseitig, die jeweilige Vorratskammer 6 zumindest nahezu vollständig überdeckend, in der Vorratskammer 6, insbesondere in einem Vorratskammerdeckel 9, angeordnet. Alle Vorratskammern 6 sind an eine gemeinsame Unterdruckleitung 10 angeschlossen, die über Stichleitungen 11 und Ventile 12 die jeweilige Vorratskammer 6 oberhalb des Filters 7 ausmündet.

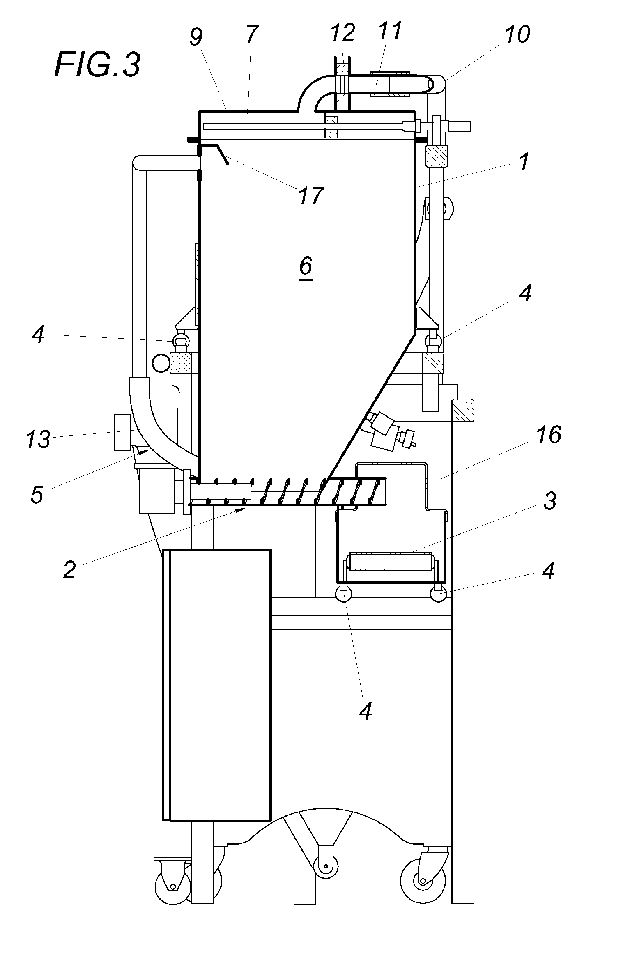

Die Stauabsaugung 5 umfasst eine im Übergabebereich von Austragseinrichtung 2 und Fördereinrichtung 3 ausmündende Saugleitung 13, die andernends unterhalb des Filters 7 in die Vorratskammer 6 einmündet. An diese Saugleitung 13 kann wechselweise ein Saugrohr angeschlossen werden, wobei beispielsweise einfach ein Schlauchwechsel erfolgt bzw. eine gesonderte Kupplung vorgesehen ist. Die Saugleitung 13 kann somit auch zur Befüllung des Vorratsbehälters 6 an einen vorzugsweise trichterförmigen Beschickungsbehälter 14 angeschlossen werden. Insbesondere Fig. 3 ist zu entnehmen, dass an eine der Saugleitungen, der dritten Saugleitung von links, ein Schlauch 15 zur Beschickung des Vorratsbehälters 6 an den Beschickungsbehälter 14 angeschlossen ist.

Der Fördereinrichtung 3 gehört ebenfalls eine diverse Wiegesensoren umfassende Wiegeeinrichtung zu. Zudem ist im Übergabebereich von Austragseinrichtung 2 und Fördereinrichtung 3 die Abdeckhaube 16 vorgesehen, an welcher die Staubabsaugung 5 angeschlossen ist. Die Abdeckhaube 16 überdeckt das Förderband zumindest nahezu vollständig. Oberhalb der Einmündung der Saugleitung 13 in die Vorratskammer 6 und unterhalb des Filters 7 ist ein gegen den Behälterboden weisendes Leitblech 17 vorgesehen.

## Patentansprüche

1. Vorrichtung zur Bereitstellung von Back- und Backzusatzstoffen in vorgegebenen Mengen, mit Vorratsbehältern (1), denen je eine Austragseinrichtung (2) zur Stoffabgabe auf eine Fördereinrichtung (3) zugehört, mit einer Wiegeeinrichtung und mit einer Steuereinrichtung, welche die Austragseinrichtungen (2) abhängig vom gemessenen Gewicht im Sinne eines Austrags von jeweils vorgegebenen Mengen ansteuert, **dadurch gekennzeichnet, dass** jedem Vorratsbehälter (1) wenigstens ein Gewichtssensor (4), insbesondere drei Gewichtssensoren (4), zugeordnet ist, und im Übergabebereich von Austragseinrichtung (2) und Fördereinrichtung (3) eine Staubabsaugung (5) vorgesehen ist.

2. Vorrichtung nach Anspruch 1, **dadurch gekennzeichnet, dass** der Vorratsbehälter (1) eine Vorratskammer (6) aufweist, die über einen Filter (7) an eine Unterdruckfördereinrichtung (8) angeschlossen ist.

3. Vorrichtung nach Anspruch 2, **dadurch gekennzeichnet, dass** der Filter (7) Vorratsbehälteroberseitig die Vorratskammer (6) zumindest nahezu vollständig überdeckend in der Vorratskammer (6) angeordnet ist.

4. Vorrichtung nach einem der Ansprüche 1 bis 3, **dadurch gekennzeichnet, dass** die Vorratskammern (6) an eine gemeinsame Unterdruckleitung (10) angeschlossen sind, die über Stichleitungen (11) und Ventile (12) in die Vorratskammer (6) oberhalb des Filters (7) ausmündet.

5. Vorrichtung nach einem der Ansprüche 1 bis 4, **dadurch gekennzeichnet, dass** die Staubabsaugung eine im Übergabebereich von Austragseinrichtung (2) und Fördereinrichtung (3) ausmündende Saugleitung (13) umfasst, die andernends unterhalb des Filters (7) in die Vorratskammer (6) einmündet.

6. Vorrichtung nach Anspruch 4, **dadurch gekennzeichnet, dass** die Saugleitung (13) zur Befüllung des Vorratsbehälters (6) an einen, vorzugsweise trichterförmigen, Beschickungsbehälter (14) anschließbar ist.

7. Vorrichtung nach einem der Ansprüche 1 bis 5, **dadurch gekennzeichnet, dass** der Fördereinrichtung (3) eine Wiegeeinrichtung zugehört.

8. Vorrichtung nach einem der Ansprüche 1 bis 6, **dadurch gekennzeichnet, dass** wenigstens im Übergabebereich von Austragseinrichtung (2) und Fördereinrichtung (3) eine Abdeckhaube (16) vorgesehen ist, an welche die Staubabsaugung (5) angeschlossen ist.

9. Vorrichtung nach Anspruch 8, **dadurch gekennzeichnet, dass** die Abdeckhaube (16) die Fördereinrichtung (3), insbesondere ein Förderband, überdeckt.

10. Vorrichtung nach einem der Ansprüche 5 bis 9, **dadurch gekennzeichnet, dass** oberhalb der Einmündung der Saugleitung (13) in die Vorratskammer (6) unterhalb des Filters (7) ein gegen den Behälterboden weisendes Leitblech (17) vorgesehen ist.
